# EUROPEAN PATENT APPLICATION

(11) **EP 4 407 089 A2**
(43) Date of publication of application: **31.07.2024**
(21) Application number: 24154030.1
(22) Date of filing: 25.01.2024
(51) Int. Cl.: D06F 39/08, D06F 105/58

(54) **WATER DETECTION AND MANAGEMENT SYSTEM USING WATER LEAK SENSOR**

(30) Priority: 25.01.2023 US 202318101398
(71) Applicant: Whirlpool Corporation, Benton Harbor, MI 49022 (US)
(72) Inventor: GONCALVES, Mario A., Benton Harbor MI 49022 (US); MALLIKARJUNAN, Gobi Krishnan, Benton Harbor MI 49022 (US); MURAD, Omar Rachid, Benton Harbor MI 49022 (US); TORRES, Caroline Ruella Paiva, Benton Harbor MI 49022 (US)
(74) Representative: PGA S.p.A., Milano, Succursale di Lugano

(57) **Abstract**

A water sensing device (114) for a water leakage detection system of a laundry appliance (102), may include a sensing strap (302) configured to selectively attach to a part of a laundry appliance (102), the sensing strap (302) configured to detect moisture; and a sensing component (310) attached to the sensing strap (302) and including at least two contacts (402) in contact with the sensing strap (302) and configured to detect moisture from the sensing strap (302), and a processor (804) configured to, in response to the contacts (402) detecting moisture from the sensing strap (302), instruct transmission of the moisture detection to a mobile device to provide an alert (708) for detected moisture.

## Description

### FIELD OF DISLOSURE

Disclosed herein are approaches for detecting a water leak in a laundry appliance.

### DESCRIPTION OF RELATED ART

Laundry treating appliances, such as clothes washers, clothes dryers, and refreshers, for example, may have a configuration based on a rotating drum that defines a treating chamber in which laundry items are placed for treating according to a cycle of operation. The laundry treating appliance may include various hoses, inlets and outlets to deliver water, detergent, etc., to the rotating drum to effectively treat the laundry items.

### SUMMARY

Laundry treating appliances utilize a water mixture to clean laundry items placed within the appliance. In doing so, fresh water may be received to the appliance, utilized to wash the laundry items, and expelled down a drain once the liquid bath portion of the wash and/or rinse is complete. Currently, consumers may install conductivity/moisture-based sensors on the floor below the appliance. However, such sensors do not indicate a location of a possible leak and often do not effect remedial action.

Disclosed herein is a leak detection system that allows for a more integrated, informative, and remedial approach to possible leaks. The system takes into consideration that certain locations of laundry treating appliances may be susceptible to leak conditions. This may be due to various causes, such as poorly fastened hoses or deterioration of hoses or fittings. A set of likely locations for monitoring may be used to identify such conditions. For instance, monitoring may be performed by sensors operable to detect leak conditions at one or more of: a connection between an inlet hose and a tap of the home, a connection between the inlet hose and a valve of the laundry treating appliance, an interface between a drain hose and a drain pipe, a door of a horizontal washer, and underneath a cabinet of the laundry treating appliance, to name a few.

The sensors may be formed of sensing straps placed on a sensor module powered by a local battery. The sensing module may be configured to communicate with a mobile device via a wireless communication protocol and alert a user via the mobile device if a leak is detected. Further, the system may indicate the location of leak based on the location of the sensor within the laundry treating appliance. This may allow the user to know where the leak occurred. Each sensor module may also include a unique quick response (QR) code or other barcode so as to be identifiable from the other sensor modules.

Responsive to detection of a water leak, the laundry treating appliance may perform various actions. For instance, the laundry treating appliance may report the issue to the user. In another example, the laundry treating appliance may additionally or alternately take action to address the water leak. These actions may include, for instance, suspension of operation of the appliance (e.g., interrupt the water supply by operating the hot and cold shut-off valve until the leak condition is addressed by the user and/or by service personnel, and/or the sensor returning to a condition in which no leak is detected).

A water sensing device for a water leakage detection system of a laundry appliance may include a sensing strap configured to selectively attach to a part of a laundry appliance, the sensing strap configured to detect moisture; and a sensing component attached to the sensing strap and including at least two contacts in contact with the sensing strap and configured to detect moisture from the sensing strap, and a processor configured to, in response to the contacts detecting moisture from the sensing strap, instruct transmission of the moisture detection to a mobile device to provide an alert for detected moisture.

In one embodiment, the sensing strap is made of a material configured to absorb moisture.

In one example, the sensing strap is made of a flexible material configured to wrap around the part of the laundry appliance.

In another embodiment, the processor of the sensing component is powered by a battery arranged within the sensing component.

In one embodiment, the sensing component includes a device specific code specific to the device.

In one example, the code is a quick response (QR) code.

In another embodiment, the alert includes a location of the leak.

In one embodiment, the water sensing device includes a plurality of water sensing devices, and wherein the processor is further configured to receive, at a set up stage, an identifier for each of water sensing devices and the location associated with each of the water sensing devices; and maintain a database of the identified sensing devices and corresponding locations.

In one example, the processor is further configured to look up the location of the sensing device associated with sensor data indicating the leak from the database generated during the set up stage.

In another embodiment, the processor is integrated into the laundry appliance.

In one embodiment, the processor is separate from the laundry appliance.

In one example the sensing component and the processor communicate wirelessly.

A method for a water leakage detection system of a laundry appliance may include receiving sensor data from at least one or more water sensing devices, and instructing, responsive to the sensor data indicating a leak, an alert indicating the leak including the location of the at least one of the or more water sensing devices.

In one example, the method including receiving, at a set up stage, an identifier for each of the one or more water sensing devices and the location associated with each of the one or more water sensing devices; and maintaining a database of the identified sensing devices and corresponding locations.

In one example, the method including the location of the one or more sensing devices associated with the sensor data indicating the leak based on the database generated during the set up stage.

### BRIEF DESCRIPTION OF THE DRAWINGS

The embodiments of the present disclosure are pointed out with particularity in the appended claims. However, other features of the various embodiments will become more apparent and will be best understood by referring to the following detailed description in conjunction with the accompanying drawings in which:
FIG. 1 illustrates an example water management system for a laundry treatment appliance according to aspects of the present disclosure;
FIG. 2 illustrates an example block diagram of the water management system of FIG. 1;
FIG. 3 illustrates an example water sensing device of the water management system of FIG. 1;
FIG. 4 illustrates an example rear view of a sensing component of the sensing device of FIG. 3;
FIG. 5 illustrates an example front view of a sensing component of the sensing device of FIG. 3;
FIG. 6 illustrates an example cross-sectional view of the sensing component of FIG. 4;
FIG. 7 illustrates an example cloud system for monitoring and addressing leak conditions at the laundry treatment appliance; and
FIG. 8 illustrates an example process for use of the water management system for water leakage detection.

### DETAILED DESCRIPTION

As required, detailed embodiments of the present disclosure are disclosed herein; however, it is to be understood that the disclosed embodiments are merely exemplary of the disclosure that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present disclosure.

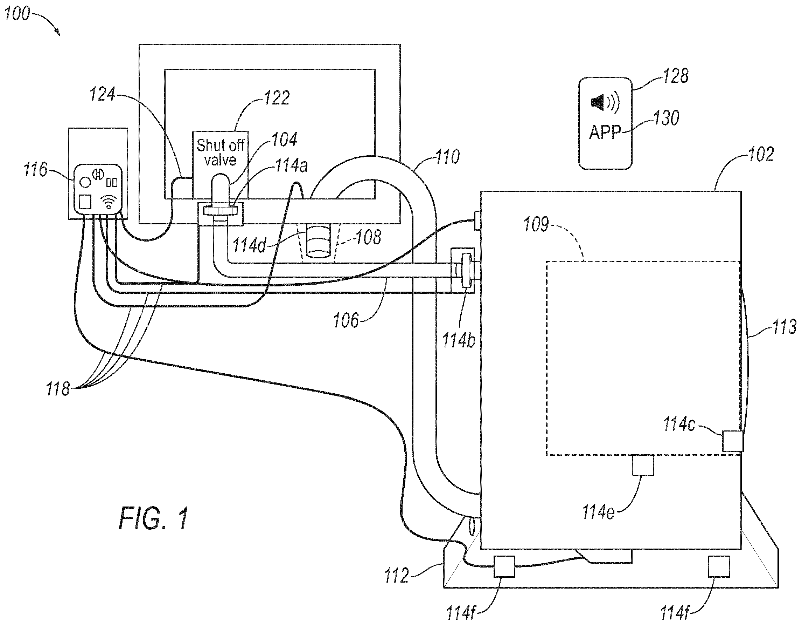

FIG. 1 illustrates an example water management system 100 for a laundry treatment appliance 102. As shown, the laundry treatment appliance 102 is coupled to a water supply 104 by a water supply hose 106 and to a drain 108 by a drain hose 110. A tray 112 may be placed below the laundry treatment appliance 102 to trap leaking water. The laundry treatment appliance 102 includes a rotating drum 109 configured to receive laundry items and treat the laundry items during various cycles. The rotating drum 109 may be selectively accessed via an appliance door 113.

The water management system 100 may include water sensing devices 114 configured to allow for the detection of leak conditions. For instance, water sensing devices 114 in the form of flexible belts may be installed around or at various components of the laundry treatment appliance 102. For example, the water sensing devices 114 may be arranged at an inlet tap (water sensing device 114a), at an inlet of the appliance 102 (water sensing device 114b), at the door 113 (water sensing device 114c), at the drain hose 110 (water sensing device 114d), at the outside of the rotating drum 109 (water sensing device 114e), and at the tray 112 (water sensing device 114f). More or fewer locations for installing the water sensing devices 114 may be appreciated and this listing is not exhaustive.

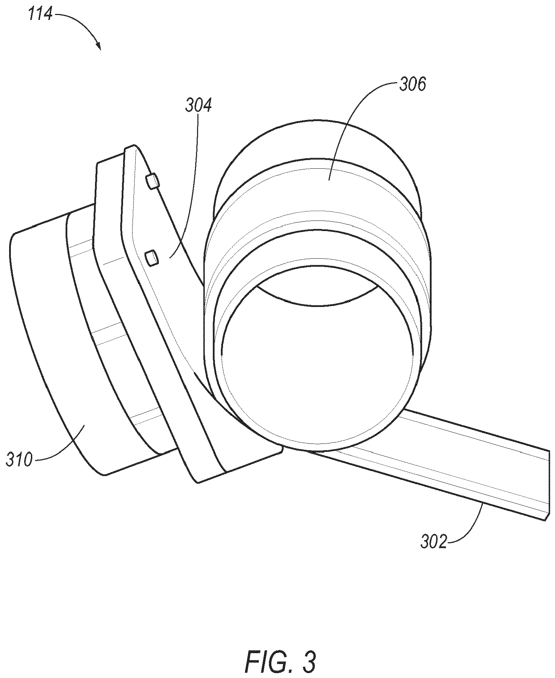

These flexible belts may have built-in electrodes to facilitate the sensing of water. Further aspects of the design of the flexible belt water sensing devices 114 are discussed with respect to FIG. 3. In one example, once the flexible belt gets wet, the belt may be removed from the component and dried prior to being reinstalled or reused. In one example, the belt may be air dried. In another example, the belt may be dried in a conventional dryer.

The water management system 100 may further include a shut off valve 122 configured to interrupt the water supply 104 in case of a leakage on the inlet side. The shut off valve 122 may be implemented, in an example, as a normally-closed valve that requires power to be in the open position. In an example, the shut off valve 122 may be driven by a hub 116 using a control cable 124 configured to power the valve 122 when water is desired from the water supply 104, and to unpower the valve 122 to interrupt the water supply 104, such as upon detection of a leak.

The water sensing device 114 may be powered via a battery. Additionally or alternatively, the water sensing devices 114 may be powered by a wall outlet or other source of electrical power via the hub 116. The hub 116 may convert the electric current from the outlet to the correct voltage, current, and frequency to power the water sensing devices 114. For instance, power cables 118 may be run between the hub 116 and the water sensing devices 114 to allow the hub 116 to provide power to the water sensing devices 114. Further, in some examples the hub 116 may be integrated into the laundry treatment appliance 102. In such an example, an internal circuit board of the laundry treatment appliance 102 may act as the hub 116 for the water sensing devices 114 and the shut off valve 122, connecting to them via a wireless technology such as BLUETOOTH low energy.

However, in the examples discussed here, the water sensing devices 114 are described as battery powered and each may be configured to connect via wireless communication protocols via a sensing device circuit board. These circuit boards may communicate with a mobile device 128 for providing warnings and reports.

The mobile device 128 may also be used to communicate with the laundry treatment appliance 102 as well as the water sensing devices 114. The mobile device 128 may be a smartphone, tablet, watch, voice-controlled virtual assistant device, or other computing device with processing and communication features to allow for communication with the laundry treatment appliance 102. A monitoring application 130 may be installed to the mobile device 128. The monitoring application 130 may allow the mobile device 128 to receive alerts or other messages from the laundry treatment appliance 102 and/or the water sensing devices 114.

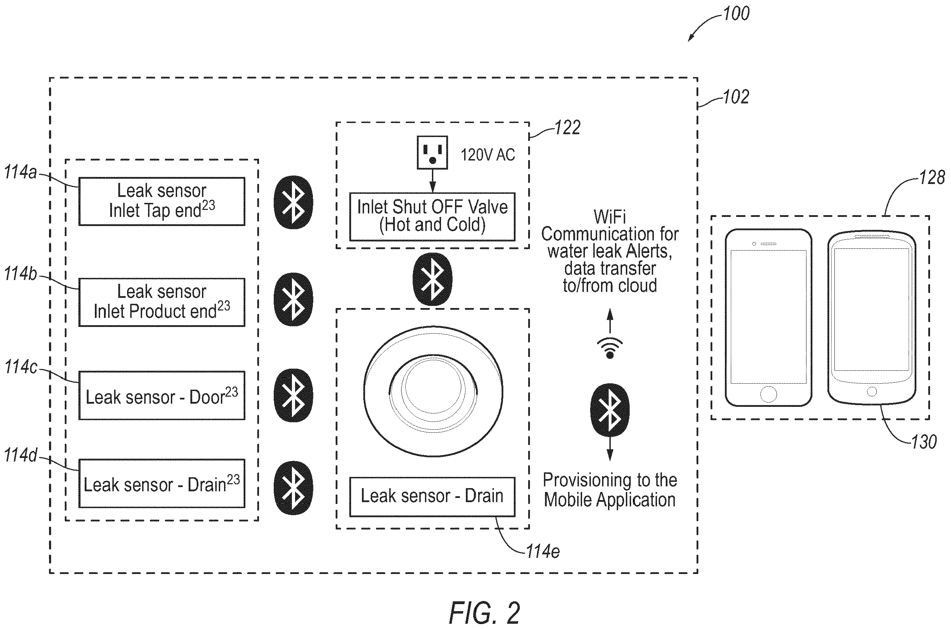

FIG. 2 illustrates an example block diagram of the water management system 100 having the water sensing devices 114, the shut off valve 122, and the mobile device 128. Each of the water sensing devices 114 and the shut off valve 122 may be in wireless communication with the mobile device 128. As explained above, the water sensing devices 114 may be arranged at various components of the laundry treatment appliance 102, including but not limited to at an inlet tap (water sensing device 114a), at an inlet of the appliance 102 (water sensing device 114b), at the door 113 (water sensing device 114c), at the drain hose 110 (water sensing device 114d), at the outside of the rotating drum 109 (water sensing device 114e), and at the tray 112 (water sensing device 114f). Each of the water sensing devices 114 may communicate with the mobile device 128 and/or the hub 116 (not shown in FIG. 2). Such communication may include sensor data about whether a leak has been detected as the respective sensing device 114.

FIG. 3 illustrates an example water sensing device 114. The water sensing device 114 may include a sensing strap 302 that is made of a flexible material and configured to be wrapped around a component such as a tube, hose or pipe of the laundry treatment appliance 102. The strap 302 may be conductive and configured to detect moisture or liquid. Additionally or alternatively, the sensing strap 302 may be made of an absorbent material, such as a sponge, cloth, or other material capable of absorbing water.

The strap 302 may be connected to a sensor base plate 304 which is attached to a sensor component 310. The sensor base plate 304 may attach to the hose and may form an incline or a curved surface at the area abutting the hose. The sensor base plate 304 may be conductive and configured to detect a change in capacitance, resistance, or other electrical properties due to water or moisture being recognized at the strap 302. Additionally or alternatively, the sensor base plate 304 may be made of an absorbent material, such as a sponge, cloth, or other material capable of absorbing water. be made of an absorbent material, such as a sponge, cloth, or other material capable of absorbing water. In another example, the material is not limited to materials that absorb. Additionally or alternatively, the material may be capable of detecting the leakage if the water is on its surface. It will depend on whether the entire strap is made of conductive polymer or if internally are conductive materials or metallic conductors. Additionally, the strap 302, in the event of a leak, may prevent damage by absorbing and holding water until a remedial action may be performed.

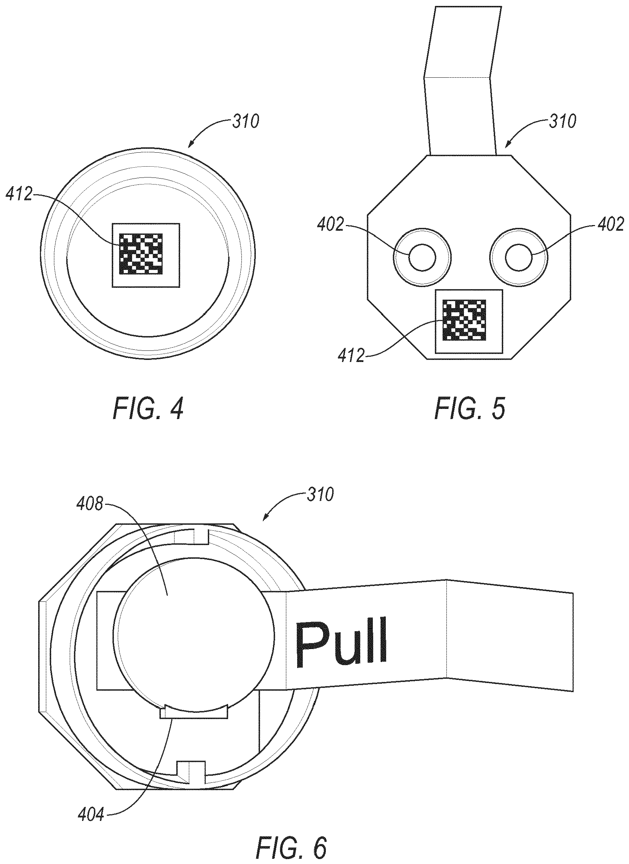

Referring to FIGs. 4, 5, and 6, the sensor component 310 may be a module configured to house components of the water sensing device 114. The sensor component 310 may include at least two contacts 402 configured to attach to the strap 302. These contacts 402 may be pairs of snaps, one being installed on the strap and another on the sensor. In one example, each pair may have one male portion and one female portion configured to mate with the male portion.

The contacts 402 may be a pair of electrodes and be configured to detect a change in capacitance, resistance, or other electrical properties therebetween to sense whether water is in the vicinity of the electrodes 204. If there is a leakage of water, then the absorbent material of the strap 302 may capture that water, thereby changing the electrical properties between the contacts 402.

The strap 302 may include an adhesive or attachment mechanism 306 to allow the sensing strap 302 to wrap around the fitting, hose, tube, or pipe for which leakage is to be monitored. In one example, the attachment mechanism 306 may be VELCRO, arranged on the one side of the strap to self-adhere to another portion of the strap 302 once wrapped around the component. In another example, clasps, glue, etc., may be used to fix the water sensing devices 114 to their respective components.

The sensor component 310 may form a housing configured to house a circuit board 404 and a battery 408. The battery may be a 3V DC battery, but other batteries or energy sources can be considered. The battery 408 may provide power to the circuit board 404 which may provide for a processor configured to wirelessly provide status information to the mobile device 128, and/or the hub 116. Based on the detected electrical signals between the contacts 402, the processor may determine whether there is a leak or not.

That is, the processor may be configured to read data from contacts 402 of the water sensing device 114 and determine whether or not to transmit instructions, e.g., wirelessly, to the mobile device 128 and/or the hub 116 using a transmitter. By using such an approach, the wireless water sensing devices 114 may be able to operate without need for wires and may be internally powered by the battery 408.

The sensor component 310 may also include a barcode 412 such as a QR code, or other two-dimensional or matrix bar code, etc. The barcode 412 may be unique to each water sensing device 114 in that each water sensing device 114 may be identified via its barcode. This may aid in verifying the location of the water sensing device 114. During installation, each water sensing device 114 may be placed at the respective components of the laundry treatment appliance 102. The user or technician installing the water sensing device 114 may install the water sensing device 114 and capture an image of the barcode 312 on the water sensing device 114. The user may then indicate the location of the water sensing device 114 associated with that barcode 412. At a later time, if water is detected at that water sensing device 114, the system 100 may attribute the water detection with the specific location of the water sensing device 114.

During operation, a processor within the mobile device 128 or the hub 116 may receive sensor data from at least one of the water sensing devices 114. The water sensing devices 114 may be of one or more of the designs discussed above, either powered via power cables 118 or powered via the battery 408. The water sensing devices 114 may be indicative of whether water is leaking at the respective sensed locations. The processor may then use the sensor data to determine whether a leak condition is indicated. If the sensor data indicates a leak condition, the processor may instruct certain actions, such as closing the shut off valve 122 to prevent further water leakage, draining the tub of the laundry treatment appliance 102, sending an alert to the monitoring application 130 executed by the mobile device 128, etc.

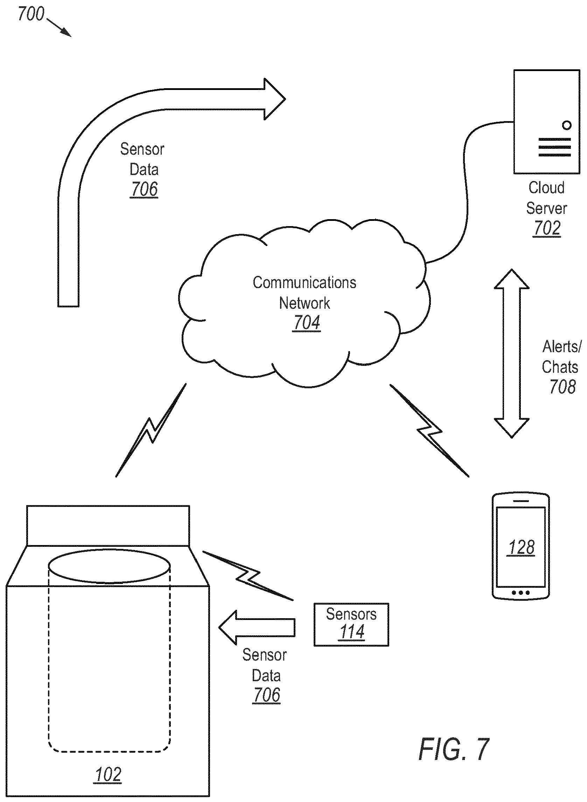

FIG. 7 illustrates an example cloud system 700 for monitoring and addressing leak conditions at the laundry treatment appliance 102. As shown, the cloud system 700 includes the laundry treatment appliance 102 in communication with a cloud server 702 over a communications network 704.

The cloud server 702 may be a computing device configured to maintain information and communicate with the laundry treatment appliance 102 over the communications network 704. The communications network 704 may be configured to provide communications services, such as packet-switched network services (e.g., Internet access, voice over Internet Protocol (VoIP) communication services), to devices connected to the communications network 704. An example of a communications network 704 is a cellular telephone network. For instance, the cloud server 702 and the laundry treatment appliance 102 may access the cellular network via connection to one or more cellular towers.

The laundry treatment appliance 102 may be configured to send sensor data 706 from the laundry treatment appliance 102 (and/or the hub 116) to the cloud server 702 over the communications network 704. The sensor data 706 may include information received from the water sensing devices 114. For instance, the sensor data 706 may indicate, for each of the water sensing devices 114 whether or not water was sensed by the respective water sensing device 114.

The cloud server 702 may be configured to receive the sensor data 706. In an example the cloud server 702 may maintain the sensor data 706 in a data store in association with an identifier of the laundry treatment appliance 102 (and/or the hub 116) sending the sensor data 706. The cloud server 702 may also maintain account information, including in a database, such as indication of which the mobile device 128 corresponds to which laundry treatment appliances 102. This information may be acquired using the barcode 312 during a set up phase to identify which water sensing device 114 was placed where with respect to the appliance components.

The cloud server 702 may be further configured to analyze the sensor data 706 to determine whether a user of the laundry treatment appliance 102 should be sent an alert or chat 708. For instance, if the sensor data 706 indicates the presence of water at one or more of the water sensing devices 114, then the cloud server 702 may send an alert or chat 708 to the mobile device 128 corresponding to the user of the laundry treatment appliance 102. This may allow the user of the mobile device 128 to be alerted of the leak condition, and, in some cases, to diagnose and address the leak condition without requiring an on-site service visit. The location of the leak condition may also be transmitted, allowing the user or technician to address the issue at the appropriate location without undue delay that may cause further damage.

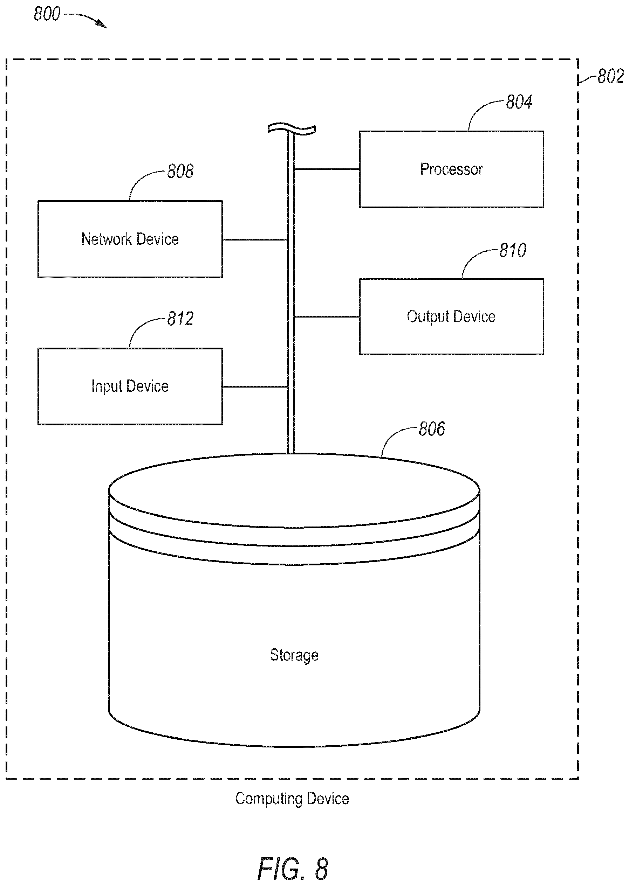

FIG. 8 illustrates an example 800 of a computing device 802 for use in the performance of water leakage detection. Referring to FIG. 8, and with reference to FIGS. 1-7, the water sensing devices 114, hub 116, and mobile device 128 may be examples of such computing devices 802. As shown, the computing device 802 may include a processor 804 that is operatively connected to a storage 806, a network device 808, an output device 810, and an input device 812. It should be noted that this is merely an example, and computing devices 802 with more, fewer, or different components may be used.

The processor 804 may include one or more integrated circuits that implement the functionality of a central processing unit (CPU) and/or graphics processing unit (GPU). In some examples, the processors 804 are a system on a chip (SoC) that integrates the functionality of the CPU and GPU. The SoC may optionally include other components such as, for example, the storage 806 and the network device 808 into a single integrated device. In other examples, the CPU and GPU are connected to each other via a peripheral connection device such as Peripheral Component Interconnect (PCI) express or another suitable peripheral data connection. In one example, the CPU is a commercially available central processing device that implements an instruction set such as one of the x86, ARM, Power, or Microprocessor without Interlocked Pipeline Stages (MIPS) instruction set families.

Regardless of the specifics, during operation the processor 804 executes stored program instructions that are retrieved from the storage 806. The stored program instructions, accordingly, include software that controls the operation of the processors 804 to perform the operations described herein. The storage 806 may include both non-volatile memory and volatile memory devices. The non-volatile memory includes solid-state memories, such as Not AND (NAND) flash memory, magnetic and optical storage media, or any other suitable data storage device that retains data when the system is deactivated or loses electrical power. The volatile memory includes static and dynamic random-access memory (RAM) that stores program instructions and data during operation of the water management system 100.

The GPU may include hardware and software for display of at least two-dimensional (2D) and optionally three-dimensional (3D) graphics to the output device 810. The output device 810 may include a graphical or visual display device, such as an electronic display screen, projector, printer, or any other suitable device that reproduces a graphical display. As another example, the output device 810 may include an audio device, such as a loudspeaker or headphone. As yet a further example, the output device 810 may include a tactile device, such as a mechanically raisable device that may, in an example, be configured to display braille or another physical output that may be touched to provide information to a user.

The input device 812 may include any of various devices that enable the computing device 802 to receive control input from users. Examples of suitable input devices that receive human interface inputs may include keyboards, mice, trackballs, touchscreens, voice input devices, graphics tablets, and the like.

The network devices 808 may each include any of various devices that enable the water sensing devices 114 and hub 116 to send and/or receive data from external devices over networks (such as the communications network). Examples of suitable network devices 808 include an Ethernet interface, a Wi-Fi transceiver, a cellular transceiver, a satellite transceiver, or a BLUETOOTH or BLUETOOTH Low Energy (BLE) transceiver, or other network adapter or peripheral interconnection device that receives data from another computer or external data storage device, which can be useful for receiving large sets of data in an efficient manner.

The processes, methods, or algorithms disclosed herein can be deliverable to/implemented by a processing device, controller, or computer, which can include any existing programmable electronic control unit or dedicated electronic control unit. Similarly, the processes, methods, or algorithms can be stored as data and instructions executable by a controller or computer in many forms including, but not limited to, information permanently stored on non-writable storage media such as read-only memory (ROM) devices and information alterably stored on writable storage media such as floppy disks, magnetic tapes, compact discs (CDs), RAM devices, and other magnetic and optical media. The processes, methods, or algorithms can also be implemented in a software executable object. Alternatively, the processes, methods, or algorithms can be embodied in whole or in part using suitable hardware components, such as Application Specific Integrated Circuits (ASICs), Field-Programmable Gate Arrays (FPGAs), state machines, controllers or other hardware components or devices, or a combination of hardware, software and firmware components.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to strength, durability, life cycle, marketability, appearance, packaging, size, serviceability, weight, manufacturability, ease of assembly, etc. As such, to the extent any embodiments are described as less desirable than other embodiments or prior art implementations with respect to one or more characteristics, these embodiments are not outside the scope of the disclosure and can be desirable for particular applications.

With regard to the processes, systems, methods, heuristics, etc. described herein, it should be understood that, although the steps of such processes, etc. have been described as occurring according to a certain ordered sequence, such processes could be practiced with the described steps performed in an order other than the order described herein. It further should be understood that certain steps could be performed simultaneously, that other steps could be added, or that certain steps described herein could be omitted. In other words, the descriptions of processes herein are provided for the purpose of illustrating certain embodiments and should in no way be construed so as to limit the claims.

Accordingly, it is to be understood that the above description is intended to be illustrative and not restrictive. Many embodiments and applications other than the examples provided would be apparent upon reading the above description. The scope should be determined, not with reference to the above description, but should instead be determined with reference to the appended claims, along with the full scope of equivalents to which such claims are entitled. It is anticipated and intended that future developments will occur in the technologies discussed herein, and that the disclosed systems and methods will be incorporated into such future embodiments. In sum, it should be understood that the application is capable of modification and variation.

All terms used in the claims are intended to be given their broadest reasonable constructions and their ordinary meanings as understood by those knowledgeable in the technologies described herein unless an explicit indication to the contrary is made herein. In particular, use of the singular articles such as "a," "the," "said," etc. should be read to recite one or more of the indicated elements unless a claim recites an explicit limitation to the contrary.

The abstract of the disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separately claimed subject matter.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

According to a 1^{st} aspect of the invention, a water sensing device for a water leakage detection system of a laundry appliance, comprises: a sensing strap configured to selectively attach to a part of a laundry appliance; and a sensing component attached to the sensing strap and including at least two contacts in contact with the sensing strap and configured to detect electrical signals from the sensing strap in response to moisture on the sensing strap, and a processor configured to, in response to determining that the electrical signal indicates a leak, instruct transmission of the moisture detection to a mobile device to provide an alert for detected moisture.

In a 2^{nd} aspect according to aspect 1, the sensing strap is made of a material configured to absorb moisture.

In a 3^{rd} aspect according to aspect 1 or 2, the sensing strap is made of a flexible material.

In a 4^{th} aspect according to aspect 3, the flexible material is configured to wrap around the part of the laundry appliance.

In a 5^{th} aspect according to any of aspects 1 to 4, the sensing component includes a device specific code specific to the device.

In a 6^{th} aspect according to aspect 5, the device specific code is a quick response code.

In a 7^{th} aspect according to any of aspects 1 to 6, the alert includes a location of the leak.

In an 8^{th} aspect according to any of aspects 1 to 7, the processor is integrated into the laundry appliance.

In a 9^{th} aspect according to any of aspects 1 to 7, the processor is separate from the laundry appliance.

In a 10^{th} aspect according to any of aspects 1 to 9, the sensing component and the processor communicate wirelessly.

In a 11^{th} aspect according to any of aspects 1 to 10, the sensing strap comprises built-in electrodes.

In a 12^{th} aspect according to any of aspects 1 to 11, the at least two contacts are a pair of electrodes are configured to detect a change in capacitance, resistance or other electrical properties therebetween.

According to an 13^{th} aspect of the invention, a water leakage detection system of a laundry appliance comprises a plurality of water sensing devices according to at least one of aspects 1 to 12.

In a 14^{th} aspect according to aspect 13, the processor is further configured to receive, at a set up stage, an identifier for each of water sensing devices and the location associated with each of the water sensing devices.

In a 15^{th} aspect according to aspect 14, the processor is further configured to maintain a database of the identified sensing devices and corresponding locations.

In a 16^{th} aspect according to aspect 15, the processor is further configured to look up the location of the sensing device associated with sensor data indicating the leak from the database generated during the set up stage.

In a 17^{th} aspect according to any of aspects 13 to 16, the water leakage detection system further includes a shut off valve configured to interrupt water supply in case of a leakage on an inlet side.

In a 18^{th} aspect according to any of aspects 13 to 17, the water leakage detection system is part of cloud system for monitoring and addressing leak conditions at the laundry treatment appliance; the cloud system including the laundry treatment appliance in communication with a cloud server over a communications network.

According to a 19^{th} aspect of the invention, a method for a water leakage detection system of a laundry appliance, comprises: receiving sensor data from at least one or more water sensing devices, and instructing, responsive to the sensor data indicating a leak, an alert indicating the leak including the location of the at least one of the or more water sensing devices.

In a 20^{th} aspect according to aspect 19, the method further comprises: receiving, at a set up stage, an identifier for each of the one or more water sensing devices and the location associated with each of the one or more water sensing devices.

In a 21^{st} aspect according to aspect 20, the method further comprises: maintaining a database of the identified sensing devices and corresponding locations.

In a 22^{nd} aspect according to aspect 21, the method further comprises: identifying the location of the one or more sensing devices associated with the sensor data indicating the leak based on the database generated during the set up stage.

In a 23^{rd} aspect, the water sensing devices of the method any of aspects 19 to 22 are according to any of aspects 1 to 12 or belong to the water leakage detection system of any of aspects 13 to 18.

In a 24^{th} aspect, a laundry appliance comprises a water sensing device according to any of aspects 1 to 12 or comprises a water leakage detection system according to any of aspects 13 to 18.

## Claims

1. A water sensing device (114) for a water leakage detection system of a laundry appliance (102), comprising:
a sensing strap (302) configured to selectively attach to a part of a laundry appliance (102); and
a sensing component (310) attached to the sensing strap (302) and including
at least two contacts (402) in contact with the sensing strap (302) and configured to detect electrical signals from the sensing strap (302) in response to moisture on the sensing strap (302), and
a processor (804) configured to, in response to determining that the electrical signal indicates a leak, instruct transmission of the moisture detection to a mobile device to provide an alert (708) for detected moisture.

2. The device of claim 1, wherein the sensing strap (302) is made of a material configured to absorb moisture.

3. The device of claim 1 or 2, wherein the sensing strap (302) is made of a flexible material configured to wrap around the part of the laundry appliance (102).

4. The device of any one of claims 1-3, wherein the processor (804) of the sensing component (310) is powered by a battery (408) arranged within the sensing component (310).

5. The device of any one of claims 1-4, wherein the sensing component (310) includes a device specific code (412) specific to the device (114).

6. The device of claim 5, wherein the code (412) is a quick response (QR) code.

7. The device of any one of claims 1-6, wherein the alert (708) includes a location of the leak.

8. The device of any one of claims 1-7, further including a system, wherein the water sensing device (114) includes a plurality of water sensing devices (114), and wherein the processor (804) is further configured to receive, at a set up stage, an identifier for each of water sensing devices (114) and the location associated with each of the water sensing devices (114); and maintain a database of the identified sensing devices (114) and corresponding locations.

9. The device of claim 8, wherein the processor (804) is further configured to look up the location of the sensing device (114) associated with sensor data indicating the leak from the database generated during the set up stage.

10. The device of any one of claims 1-9, wherein the processor (804) is integrated into the laundry appliance (102).

11. The device of any one of claim 1-9, wherein the processor (804) is separate from the laundry appliance (102).

12. The device of claims 1-11, wherein the sensing component (310) and the processor (804) communicate wirelessly.

13. A method for a water leakage detection system of a laundry appliance (102), comprising:
receiving sensor data from at least one or more water sensing devices (114), and
instructing, responsive to the sensor data indicating a leak, an alert (708) indicating the leak including the location of the at least one of the or more water sensing devices (114).

14. The method of claim 13, further comprising receiving, at a set up stage, an identifier for each of the one or more water sensing devices (114) and the location associated with each of the one or more water sensing devices (114); and maintaining a database of the identified sensing devices (114) and corresponding locations.

15. The method of claim 14, further comprising identifying the location of the one or more sensing devices (114) associated with the sensor data indicating the leak based on the database generated during the set up stage.
